# EUROPÄISCHE PATENTSCHRIFT

(11) **EP 2 409 581 B1**
(45) Veröffentlichungstag und Bekanntmachung des Hinweises auf die Patenterteilung: **09.07.2014**
(21) Anmeldenummer: 11164305.2
(22) Anmeldetag: 29.04.2011
(51) Int. Cl.: A23L 2/46, B65B 55/14

(54) **Vorrichtung und Verfahren zum Bereitstellen eines wiederzuverwendenden zu behandelnden flüssigen Produkts**
Device and method for producing a reusable liquid product
Dispositif et procédé de préparation d'un produit liquide recyclable devant être traité

(30) Priorität: 16.07.2010 DE 102010031478
(43) Veröffentlichungstag der Anmeldung: 25.01.2012
(73) Patentinhaber: Krones AG, 93073 Neutraubling (DE)
(72) Erfinder: Recktenwald, Dirk, 93077 Bad Abbach (DE); Mühlbauer, Jürgen, 93182, Duggendorf (DE)
(74) Vertreter: Grünecker, Kinkeldey, Stockmair & Schwanhäusser

(56) Entgegenhaltungen:
- WO-A1-99/26844
- DE-U1- 20 105 716

## Beschreibung

Die Erfindung betrifft eine Vorrichtung nach dem Oberbegriff des Anspruchs 1 und ein Verfahren nach dem Oberbegriff des Anspruchs 8.

Vor der Abfüllung fertig ausgemischter Produkte, wie z. B. Saftgetränken, werden diese in der Regel in einem Vorlaufbehälter zwischengespeichert und einer Behandlung zugeführt, beispielsweise einer Wärmebehandlung oder einer Entgasung. Bei einem produktionsbedingten Stillstand der Abfüllung darf das Produkt nicht in den Behandlungsanlagen stehen und muss dann entweder im Kreislauf gefahren, einem Auffangbehälter zur Wiedergewinnung des behandelten Produkts zugeführt oder entsorgt werden.

Um behandeltes Produkt unter Einhaltung einer geforderten Mindestqualität wiederverwerten zu können, ist aus der DE 201 05 716 U1 eine Vorrichtung gemäß Oberbegriff des Anspruchs 1 bekannt, um behandeltes Produkt bei einem Stillstand einer Abfülleinheit zunächst in einem Sammelbehälter aufzufangen und bei Wiederaufnahme des Betriebs unter einem definierten Mischungsverhältnis einem Produktstrom mit unbehandeltem Produkt zuzumischen. Das derart gemischte Produkt wird dann in einen Vorlaufbehälter der Behandlungseinheit eingeleitet und nachfolgend in dieser behandelt. Das behandelte Produkt kann dann schließlich abgefüllt werden.

Nachteilig bei diesem Verfahren ist jedoch, dass der oben genannte, separate Sammelbehälter nötig ist, wodurch erhebliche Kosten für Material, Konstruktion, Montage und Inbetriebnahme entstehen. Außerdem muss in der Abfülllinie ein erhöhter Platzbedarf in Kauf genommen werden.

Aufgabe der Erfindung ist es, die oben beschriebenen Nachteile abzumildern oder zu beseitigen.

Die gestellte Aufgabe wird mit einer Vorrichtung gemäß Anspruch 1 gelöst. Dadurch, dass unbehandeltes Produkt durch eine Umgehungsleitung unter Umgehung des Vorlaufbehälters in die ausgangsseitige Vorlaufleitung eingespeist werden kann, ist es möglich, im Vorlaufbehälter zwischengespeichertes behandeltes Produkt mit unbehandeltem Produkt in der Vorlaufleitung zu vermischen.

In dem Vorlaufbehälter könnte jedoch auch eine Mischung aus behandeltem und unbehandeltem Produkt zwischengespeichert werden. Das abzufüllende Produkt ist vorzugsweise ein fertig ausgemischtes Getränk. Das Produkt könnte aber auch ein anderes Fluid sein, wie beispielsweise ein fließfähiges Medikament. Der Vorlaufbehälter kann auch dazu dienen, unbehandeltes Produkt zwischenzuspeichern, insbesondere, wenn kein behandeltes und zurückzuführendes Produkt vorliegt. Dies ist beispielsweise nach dem Anfahren der Anlage der Fall, bevor erstmalig ein Stillstand beim Abfüllen auftritt.

Eine besonders vorteilhafte Ausgestaltung der erfindungsgemäßen Vorrichtung umfasst einen Durchfluss-Steller zum Einstellen des Durchflusses durch die Umgehungsleitung. Dadurch kann dem aus dem Vorlaufbehälter abfließenden Produkt eine vorgegebene Menge des unbehandelten Produkts zugemischt werden, um in der Mischung eine für eine nachfolgende Behandlung geeignete Produktqualität bereitzustellen, insbesondere einen maximal zulässigen Anteil bereits behandelten Produkts. Es wäre ergänzend auch möglich, einen weiteren Durchfluss-Steller zum Einstellen des Durchflusses des aus dem Vorlaufbehälter ausgeleiteten zwischengespeicherten Produkts vorzusehen.

Eine besonders günstige Ausgestaltung der Vorrichtung umfasst ferner einen eingangsseitigen Durchfluss-Sensor oder -Messer zum Messen des Durchflusses durch die eingangsseitige Vorlaufleitung. Dadurch kann alternativ der Durchfluss von unbehandeltem Produkt in Richtung des Vorlaufbehälters oder in die Umgehungsleitung bestimmt werden. Es ist somit nur ein einzelner Durchfluss-Sensor nötig, um wahlweise den Volumenstrom des unbehandelten Produkts in Richtung des Vorlaufbehälters und in die Umgehungsleitung zu messen.

Vorzugsweise umfasst die erfindungsgemäße Vorrichtung ferner einen ausgangsseitigen Durchfluss-Sensor oder -Messer zum Messen des Durchflusses durch die ausgangsseitige Vorlaufleitung. Dadurch kann der Volumenstrom in der ausgangsseitigen Vorlaufleitung gemessen werden, um wahlweise den Durchfluss von unbehandeltem Produkt oder einer Mischung aus unbehandeltem Produkt und behandeltem Produkt zu messen. Insbesondere in Verbindung mit einem eingangsseitigen Durchflusssensor in der eingangsseitigen Vorlaufleitung lässt sich mit dem ausgangsseitigen Durchflusssensor ein Mischungsverhältnis aus dem durch die Umgehungsleitung strömenden unbehandelten Produkt und dem aus dem Vorlaufbehälter ausgeleiteten zwischengespeichertem Produkt berechnen. Es lässt sich somit nicht nur der in Richtung einer nachfolgenden Behandlungseinheit abfließende Volumenstrom eines zu behandelnden Produkts bestimmen, sondern auch das Mischungsverhältnis bei der Rückführung behandelten Produkts kontrollieren.

Eine besonders günstige Ausgestaltung der erfindungsgemäßen Vorrichtung umfasst ferner eine Regelungseinheit, die derart ausgebildet ist, dass sie ein Mischungsverhältnis des zwischengespeicherten Produkts zu dem durch die Umgehungsleitung eingespeisten Produkt in der ausgangsseitigen Vorlaufleitung mittels Ansteuerung des Durchfluss-Stellers auf Grundlage von Messsignalen des eingangsseitigen und des ausgangsseitigen Durchfluss-Sensors einstellen kann. Dadurch lässt sich mit nur zwei Eingangsregelgrößen das Mischungsverhältnis kontinuierlich durch Betätigen einer Stelleinheit einstellen und kontrollieren. Somit lässt sich eine geforderte Mindestqualität des zu behandelnden Produkts sicherstellen. Hierbei lässt sich insbesondere vermeiden, dass der Anteil an bereits behandeltem Produkt bei der Zuführung zur Behandlungseinheit einen vorgegebenen Höchstwert überschreitet.

Vorzugsweise zweigt die Umgehungsleitung in Strömungsrichtung hinter dem eingangsseitigen Durchfluss-Sensor von der eingangsseitigen Vorlaufleitung ab. Dadurch lässt sich der Abschnitt der eingangsseitigen Vorlaufleitung mit dem eingangsseitigen Durchfluss-Sensor sowohl zur Messung des Durchflusses in Richtung des Vorlaufbehälters als auch in die Umgehungsleitung verwenden.

Die gestellte Aufgabe wird ferner gelöst mit einer Vorrichtung zum Behandeln eines flüssigen Produkts, die die erfindungsgemäße Vorrichtung und eine Behandlungseinheit umfasst, wobei das Fassungsvermögen des Vorlaufbehälters mindestens so groß ist wie das Gesamtfassungsvermögen der Rückführleitung, der Behandlungseinheit und einer die Behandlungseinheit und die Rückführleitung verbindenden Verbindungsleitung, insbesondere einschließlich des Fassungsvermögens einer zwischen die Rückführleitung und die Verbindungsleitung geschalteten Füllermaschine. Dadurch ist es möglich, den gesamten Produktinhalt der Behandlungsanlage bei einem Stillstand der Abfüllanlage oder einem Ende der Abfüllung in den Vorlaufbehälter zurückzuführen und einer späteren, erneuten Behandlung zuzuführen.

Die gestellte Aufgabe wird ferner gelöst mit einem Verfahren nach Anspruch 8. Dadurch, dass das unbehandelte Produkt durch eine den Vorlaufbehälter umgehende Umgehungsleitung in die ausgangsseitige Vorlaufleitung eingeleitet wird, ist es möglich, sowohl unbehandeltes Produkt ohne Vermischung mit behandeltem Produkt in eine nachfolgende Behandlungseinheit zu leiten als auch unbehandeltes Produkt mit behandeltem Produkt zu vermischen. Der Vorlaufbehälter kann daher sowohl eine reine Vorlauffunktion erfüllen, d. h. unbehandeltes Produkt wird in den Vorlaufbehälter eingeleitet, in diesem zwischengespeichert und anschließend wieder aus dem Vorlaufbehälter ausgeleitet und einer Behandlung zugeführt. Der Vorlaufbehälter kann aber auch die Funktion eines Sammelbehälters für wiederzuverwertendes behandeltes Produkt erfüllen, wodurch ein zusätzlicher Sammelbehälter entbehrlich wird. Es ist auch möglich, eine vorgegebene Mischung aus behandeltem und unbehandeltem Produkt in den Vorlaufbehälter zwischenzuspeichern und unter einem vorgegebenen Mischungsverhältnis mit dem durch die Umgehungsleitung zugeleiteten frischen Produkt zu vermischen. Es ist auch möglich, ausschließlich bereits behandeltes Produkt aus dem Vorlaufbehälter der Behandlungseinheit zuzuführen, für den Fall, dass kein unbehandeltes Produkt mehr zur Verfügung steht. Wenn beispielsweise auch bei Produktionsende kein Frischeprodukt mehr zur Verfügung steht, kann zu 100% mit bereits behandeltem Produkt bis zum Ende gefahren werden.

Vorzugsweise umfasst das erfindungsgemäße Verfahren ferner einen Schritt d), in dem das im Schritt b) ausgeleitete zwischengespeicherte Produkt als ein erster Teilproduktstrom und das im Schritt c) eingeleitete unbehandelte Produkt als ein zweiter Teilproduktstrom zu einem Produktstrom zusammengeführt und zur Behandlung des Produkts weitergeleitet werden. Dadurch lässt sich bereits behandeltes Produkt derart mit unbehandeltem Produkt vermischen, dass sich der vermischte Produktstrom für eine nachfolgende Behandlung eignet. Eine solche Behandlung kann z. B. eine Wärmebehandlung sein oder eine Entgasung des Produkts. Somit lässt sich die ausgangsseitige Vorlaufleitung als eine Mischeinrichtung nutzen, um ein für die Behandlung geeignetes Mischungsverhältnis aus behandeltem und unbehandeltem Produkt herzustellen.

Vorzugsweise wird der Volumenstrom des zweiten Teilproduktstroms ermittelt, indem ein Durchfluss durch eine eingangsseitige Vorlaufleitung zum Einleiten unbehandelten Produkts in den Vorlaufbehälter gemessen wird. Eine derartige Vorgehensweise macht einen zusätzlichen Durchfluss-Sensor in der Umgehungsleitung entbehrlich. Dadurch kann nicht nur die Anzahl der benötigten Durchfluss-Sensoren reduziert werden, sondern auch die Anzahl der in einer Regeleinheit zu verarbeitenden Messsignale.

Bei einer besonders günstigen Ausgestaltung des erfindungsgemäßen Verfahren wird der Durchfluss des Produktstroms in der ausgangsseitigen Vorlaufleitung gemessen, und das Mischungsverhältnis des ersten und zweiten Teilproduktstroms durch Anpassen des Anteils des ersten Teilproduktstroms an dem Produktstrom eingestellt. Es ist daher nicht nötig, den Volumenstrom des aus dem Vorlaufbehälter abfließenden, zwischengespeicherten Produkts zu messen. Die Anzahl der benötigten Messeinheiten und Messsignale kann somit reduziert werden. Es wäre allerdings auch möglich, zusätzlich den Durchfluss des aus dem Vorlaufbehälter abfließenden Produkts zu messen.

Vorzugsweise umfasst das erfindungsgemäße Verfahren ferner folgende Schritte: f) Erkennen, dass ein minimaler Füllstand des zwischengespeicherten Produkts im Vorlaufbehälter erreicht ist; g) Einleiten von unbehandeltem Produkt in den Vorlaufbehälter; und/oder h) Reduzieren des ersten Teilproduktstroms und Anpassen des Durchflusses des zweiten Teilproduktstroms an den Produktstrom, oder Unterbrechen des ersten Teilproduktstroms und Angleichen des Durchflusses des zweiten Teilproduktstroms an den Produktstrom. Dadurch ist es möglich, ohne Unterbrechung des Produktstroms von einem Zumischbetrieb auf einen reinen Vorlaufbetrieb zu wechseln. Hierbei ist unter einem Zumischbetrieb ein Zustand zu verstehen, bei dem unbehandeltes Produkt aus der Umgehungsleitung mit zwischengespeichertem Produkt aus dem Vorlaufbehälter vermischt wird. Dem gegenüber ist unter einem Vorlaufbetrieb ein Zustand zu verstehen, bei dem nur unbehandeltes Produkt durch die Umgehungsleitung und/oder durch den Vorlaufbehälter geleitet und einer nachfolgenden Behandlung zugeführt wird. Es wäre somit auch möglich, einen Teilstrom des unbehandelten Produkts durch die Umgehungsleitung zu führen und einen weiteren Teilstrom des unbehandelten Produkts durch den Vorlaufbehälter hindurch zu leiten.

Vorzugsweise ist der Wassergehalt des im Schritt b) ausgeleiteten zwischengespeicherten Produkts und des im Schritt c) eingeleiteten unbehandelten Produkts identisch. Es handelt sich somit sowohl beim unbehandelten als auch beim behandelten Produkt um ein fertig ausgemischtes Produkt, dessen Rezeptur sich beim Mischen in der ausgangsseitigen Vorlaufleitung und/oder in dem Vorlaufbehälter nicht ändert. Dadurch ist auch eine wiederholte Wiedergewinnung bereits behandelten Produkts möglich, solange ein vorgegebener Bereich des Mischungsverhältnisses aus unbehandeltem und behandeltem Produkt eingehalten wird.

Vorzugsweise wird der Schritt a) des Zurückführens von behandeltem und wiederzuverwertendem Produkt in einen Vorlaufbehälter und des dortigen Zwischenspeicherns des Produkts während oder in Folge eines Stillstands einer Füllmaschine zum Abfüllen des behandelten Produkts durchgeführt. Das erfindungsgemäße Verfahren lässt sich mit einer Füllmaschine in besonders vorteilhafter Weise kombinieren, um wiederkehrende produktionsbedingte Stillstandsphasen der Abfüllung zu kompensieren.

Bei einer besonders vorteilhaften Ausgestaltung des erfindungsgemäßen Verfahrens wird das Produkt während des Stillstands der Füllmaschine unter Einbeziehung der Schritte a) und b) im Kreislauf gefahren. Dadurch können insbesondere kurzfristige Stillstandsphasen der Abfüllung überbrückt werden, indem das Produkt in Bewegung gehalten wird, und in den Behandlungseinheiten nicht für einen unzulässig langen Zeitraum verweilen muss. Beispielsweise kann bei thermischem Behandlungsverfahren eine Überhitzung des Produkts vermieden werden.

Eine bevorzugte Ausführungsform der erfindungsgemäßen Vorrichtung ist in der Zeichnung dargestellt. Die einzige Figur zeigt ein Schema der erfindungsgemäßen Vorrichtung mit zugehörigen Produktströmen.

Demnach umfasst die erfindungsgemäße Vorrichtung 1 zur Bereitstellen eines flüssigen Produkts 2, wie beispielsweise eines Getränks, insbesondere eines mit Wärme zu behandelnden Getränks, einen Vorlaufbehälter 3 mit einer eingangsseitigen Vorlaufleitung 5 und einer ausgangsseitigen Vorlaufleitung 7, die mit einer nachfolgenden Wärmebehandlungseinheit 9 verbunden werden kann. Ebenso dargestellt ist eine Rückführleitung 11, die beispielsweise mit einer Abfüllmaschine 12 verbunden werden kann. Ferner ist an dem Vorlaufbehälter 3 eine Überbrückungsleitung 13 vorgesehen, die beispielsweise mit der eingangsseitigen Vorlaufleitung 5 und der ausgangsseitigen Vorlaufleitung 7 verbunden ist. Zum Einstellen des Durchflusses durch die Umgehungsleitung 13 ist an dieser eine Stelleinrichtung 15 vorgesehen, wie beispielsweise ein Regelventil.

Die eingangsseitige Vorlaufleitung 5 dient zur Einspeisung eines unbehandelten Produkts 2 in den Vorlaufbehälter 3 und/oder in die Umgehungsleitung 13. Um den Volumenstrom VV des unbehandelten Produkts 2 in den Vorlaufbehälter 3 unabhängig von dem Volumenstrom VU durch die Umgehungsleitung 13 einstellen zu können, ist an der eingangsseitigen Vorlaufleitung 5 hinter einer Abzweigung 19 der Umgehungsleitung 13 von der eingangsseitigen Vorlaufleitung 5 ein Durchfluss-Steller 21 vorgesehen. Dieser könnte beispielsweise ein regelbares Ventil sein.

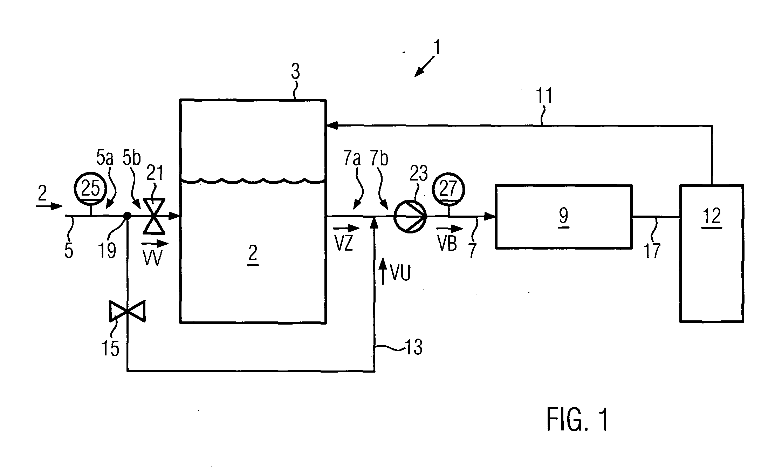

In der Figur 1 angedeutet ist ferner eine Vorlaufpumpe 23 zum Fördern des Produkts 2 aus der ausgangsseitigen Vorlaufleitung 7 in Richtung der Behandlungseinheit 9. Zur Messung eines Volumen- oder Massestroms des Produkts 2 ist ferner an der eingangsseitigen Vorlaufleitung 5 ein Durchfluss-Sensor oder Durchfluss-Messer 25 und an der ausgangsseitigen Vorlaufleitung 7 ein Durchfluss-Sensor oder Durchfluss-Messer 27 vorgesehen. Diese sind ebenso wie der Durchfluss-Steller 15 mit einer nicht dargestellten Regeleinheit verbunden.

Wie die Figur 1 ferner erkennen lässt, insbesondere anhand der durch Pfeilspitzen angedeuteten Fließrichtung in den Leitungen 5, 7, 11 und 13, kann der Vorlaufbehälter 3 sowohl durch die eingangsseitige Vorlaufleitung 5 mit unbehandeltem Produkt 2 befüllt werden, als auch durch die Rückführleitung 11 mit behandeltem Produkt 2. Die Rückführleitung 11 könnte daher nicht nur mit der Fülleinheit 12, sondern beispielsweise auch mit der Behandlungseinheit 9 verbunden sein. Es ist somit je nach Betriebszustand möglich, dass der Vorlaufbehälter 3 ausschließlich unbehandeltes Produkt 2, ausschließlich behandeltes Produkt 2 oder eine Mischung aus behandeltem und unbehandeltem Produkt 2 enthält. Dem gegenüber führt die Umgehungsleitung 13 ausschließlich unbehandeltes Produkt 2.

Die eingangsseitige Vorlaufleitung 5 ist in einen Abschnitt 5a vor der Abzweigung 19 und in einen Abschnitt 5b nach der Abzweigung 19 unterteilt. Der Durchflussmesser 25 ist vorzugsweise im Abschnitt 5a angeordnet, so dass dieser für eine Durchflussmessung des unbehandelten Produkts 2 sowohl in Richtung des Vorlaufbehälters 3 als auch in Richtung der Umgehungsleitung 13 eingesetzt werden kann.

Die ausgangsseitige Vorlaufleitung 7 ist in einen Abschnitt 7a vor dem Zusammenfluss mit der Umgehungsleitung 13 und in einen Abschnitt 7b nach dem Zusammenfluss mit der Umgehungsleitung 13 unterteilt. Der Durchflussmesser 27 ist in dem Abschnitt 7b angeordnet, so dass der Durchfluss des der Wärmebehandlung 9 zuzuführenden Produktstroms VB unabhängig davon gemessen werden kann, zu welchen Anteilen sich der Produktstrom VB aus dem Teilproduktstrom VZ des zwischengespeicherten Produkts 2 und dem durch die Umgehungsleitung 13 geleiteten Teilproduktstrom VU zusammensetzt.

In einem Betriebszustand zur Rückgewinnung und Zumischung bereits behandelten Produkts 2 befindet sich im Vorlaufbehälter 3 zumindest anteilig behandeltes Produkt 2. Um dieses zwischengespeicherte Produkt 2 wieder der Behandlung zuzuführen, wird der Durchfluss des Teilproduktstroms VU des unbehandelten Produkts 2 derart eingestellt, dass sich zusammen mit dem Teilproduktstrom VZ des aus dem Vorlaufbehälter abfließenden Produkts 2 ein vorgegebener Durchfluss des Produktstroms VB des zu behandelnden Produkts 2 ergibt, wobei gleichzeitig ein Mindestanteil an unbehandeltem Produkt 2 eingehalten wird. Zum Einstellen eines vorgegebenen Mischungsverhältnisses der Teilproduktströme VZ und VU in dem Produktstrom VB genügt es, den Durchfluss durch die eingangsseitige Vorlaufleitung 5 mit dem Durchflussmesser 25 und den Durchfluss durch die ausgangsseitige Vorlaufleitung 7 mit dem Durchflussmesser 27 zu messen. Der Durchfluss durch den Abschnitt 7a der ausgangsseitigen Vorlaufleitung 7 kann aus diesen Messgrößen dann berechnet werden. D.h. der Durchfluss-Steller 15 regelt auf den Durchfluss VU und die Pumpe 23 wird auf den Durchfluss VB durch den Leitungsabschnitt 7b geregelt. Somit ist die exakte Regelung des Mischverhältnisses möglich. Zusätzlich wäre es auch möglich, einen zusätzlichen Durchflussmesser in dem Abschnitt 7a der ausgangsseitigen Vorlaufleitung 7 vorzusehen.

Das Fassungsvermögen des Vorlaufbehälters 3 ist vorzugsweise größer als das Gesamtvolumen der ausgangsseitigen Vorlaufleitung 7, der Wärmebehandlungseinheit 9, einer Verbindungsleitung 17 zwischen der Wärmebehandlungseinheit 9 und der Abfülleinheit 12 sowie der Rückführleitung 11. Dadurch ist gewährleistet, dass der Vorlaufbehälter bei einem Stillstand der Fülleinheit 12 das gesamte Produktvolumen aus den vorgenannten Einheiten aufnehmen kann. Der Vorlaufbehälter 3 kann auch so ausgelegt sein, dass er zusätzlich ein vorgegebenes Produktvolumen aus der Fülleinheit 12 aufnehmen kann. Besonders vorteilhaft ist eine Auslegung, bei der der Vorlaufbehälter 3 mindestens das doppelte Fassungsvermögen hat, wie alle an den Vorlaufbehälter 3 angeschlossenen Leitungen 7, 11, 17, Behandlungseinheiten 9 und Fülleinheiten 12, die behandeltes Produkt 2 führen können. Damit lässt sich verhindern, dass bereits behandeltes Produkt 2 bei einem Stillstand der Fülleinheit 12 verworfen werden muss. Eine derartige Dimensionierung des Vorlaufbehälters 3 ist jedoch nicht zwingend notwendig. Es ist entscheidend, dass bereits behandeltes Produkt 2 mit unbehandeltem Produkt 2 ohne eine separaten Auffangbehälter für das behandelte Produkt 2 gemischt und einer erneuten Behandlung zugeführt werden kann.

Mit der erfindungsgemäßen Vorrichtung 1 kann beispielsweise wie folgt gearbeitet werden:
Vor Beginn einer Abfüllung behandelten Produkts 2 wird beispielsweise über den Vorlaufbehälter 3 unbehandeltes Produkt 2 kontinuierlich über die ausgangsseitige Vorlaufleitung 7 in die Wärmebehandlungseinheit 9 und anschließend in die Fülleinheit 12 geleitet. Vorzugsweise wird vor Beginn der Abfüllung zunächst die Rückführleitung 11 mit dem behandelten Produkt 2 gefüllt, so dass bei einem möglichen Stillstand der Fülleinheit 12 sofort mit einer Rückführung des behandelten Produkts 2 begonnen werden kann. Dies ist jedoch nicht zwingend erforderlich.

Liegt kein wiederzuverwertendes, behandeltes Produkt 2 vor, beispielsweise vor einem erstmaligen Stillstand der Abfülleinheit 2, kann das unbehandelte Produkt 2 entweder nach Öffnen der Stelleinrichtung 21 durch den Vorlaufbehälter 3 in die ausgangsseitige Vorlaufleitung 7 geleitet werden oder nach Öffnen der Stelleinrichtung 15 durch die Umgehungsleitung 13. In beiden Fällen kann der Durchfluss des Produkts 2 mit den Durchflussmessern 25 und/oder 27 gemessen werden.

Bei einem Stillstand der Fülleinheit 12 wird behandeltes Produkt 2 durch die Rückführleitung 11 in den Vorlaufbehälter 3 zurückgeführt. Vorzugsweise wird das Produkt 2 dann durch die ausgangsseitige Vorlaufleitung 7, die Wärmebehandlungseinheit 9 und die Rückführleitung 11 im Kreis gefahren, um zu vermeiden, dass das Produkt 2 länger als zulässig in der Behandlungseinheit 9 verweilt. Hierbei kann dem zurückgeführten, behandelten Produkt 2 aus der eingangsseitigen Vorlaufleitung 5 unbehandeltes Produkt 2 im Vorlaufbehälter 3 zugemischt werden, um einer übermäßigen, wiederholten Behandlung des Produkts 2 vorzubeugen.

Ist der Stillstand der Fülleinheit 12 beendet, so kann zunächst unbehandeltes Produkt 2 über die Umgehungsleitung 13 in die ausgangsseitige Vorlaufleitung 7 eingeleitet und der Behandlungseinheit 9 zugeführt werden, so dass das gesamte, bereits behandelte Produkt 2 durch die Rückführleitung 11 in den Vorlaufbehälter 3 ausgeschoben wird. Ist sichergestellt, dass nur einmalig behandeltes Produkt 2 durch die Verbindungsleitung 17 zur Fülleinheit 12 fließt, so kann bereits behandeltes Produkt 2 aus dem Vorlaufbehälter 3 in die ausgangsseitige Vorlaufleitung 7 ausgeleitet werden. Gleichzeitig wird unbehandeltes Produkt 2 über die Umgehungsleitung 13 in die ausgangsseitige Vorlaufleitung 7 kontrolliert eingeleitet und so dem zwischengespeicherten Produkt 2 aus dem Vorlaufbehälter 3 in einem gewünschten Mischungsverhältnis zugemischt. Hierbei wird der Durchfluss oder Volumenstrom durch die Umgehungsleitung 13 so eingestellt, dass eine Mindestanforderung an die Qualität des vermischten Produktstroms VB nach der Behandlung in der Behandlungseinheit 9 erfüllt ist. Die Zumischung aus dem Vorlaufbehälter 3 liegt in der Regel in einem Bereich von 2 bis 110% (bei möglicher Überlast) der Produktionsleistung.

Ein derartiger Betriebszustand zur Zumischung bereits behandelten Produkts 2 zu unbehandeltem Produkt 2 kann so lange aufrechterhalten werden, solange ausreichend behandeltes Produkt 2 in dem Vorlaufbehälter 3 gespeichert ist. Wird in diesem ein vorgegebener Mindestfüllstand unterschritten, so kann beispielsweise auf den Betriebszustand vor dem Stillstand der Fülleinheit 12 zurückgewechselt werden.

Es wäre aber auch möglich, einer in dem Vorlaufbehälter 3 verbliebenen Restmenge behandelten Produkts 2 zusätzlich unbehandeltes Produkt 2 durch die eingangsseitige Vorlaufleitung 5 zuzumischen, und das Mischungsverhältnis der Teilproduktströme oder Teilvolumenströme VZ und VU so einzustellen, dass eine Mindestanforderung an die Qualität des gemischten Produktstroms oder Volumenstroms VB erfüllt ist. Eine solche Vorgehensweise ermöglicht es, das gesamte, in dem Vorlaufbehälter 3 zwischengespeicherte und behandelte Produkt 2 wieder zu verwerten und abzufüllen.

Mit der erfindungsgemäßen Vorrichtung 1 lässt sich bereits behandeltes Produkt 2 bei einem Stillstand einer Fülleinheit 12 wirtschaftlich zurückgewinnen und einer erneuten Behandlung zuführen. Hierbei lässt sich unbehandeltes Produkt 2 flexibel in einem gewünschten Mischungsverhältnis dem bereits behandelten Produkt 2 zumischen. Mit Hilfe der Umgehungsleitung 13 wird ein separater Sammelbehälter für bereits behandeltes Produkt 2 entbehrlich. Dabei lassen sich verschiedene Betriebszustände mit geringem apparativem Aufwand und einfacher Regelung realisieren.

## Patentansprüche

1. Vorrichtung (1) zum Bereitstellen eines zu behandelnden flüssigen Produkts (2), insbesondere eines Getränks, mit:
- einem Vorlaufbehälter (3) zum Zwischenspeichern des Produkts (2);
- einer ausgangsseitigen Vorlaufleitung (7) zum Ausleiten des Produkts (2) aus dem Vorlaufbehälter (3) und zum Weiterleiten des Produkts (2) für dessen Behandlung;
- einer eingangsseitigen Vorlaufleitung (5) zum Einleiten unbehandelten Produkts (2) in den Vorlaufbehälter (3); und
- einer Rückführleitung (11) zum Zurückführen behandelten Produkts (2) in den Vorlaufbehälter (3), **gekennzeichnet durch** eine Umgehungsleitung (13), **durch** die unbehandeltes Produkt (2) unter Umgehung des Vorlaufbehälters (3) in die ausgangsseitige Vorlaufleitung (7) eingespeist werden kann.

2. Vorrichtung nach Anspruch 1, ferner mit einem Durchfluss-Steller (15) zum Einstellen des Durchflusses (VU) durch die Umgehungsleitung (13).

3. Vorrichtung nach Anspruch 1 oder 2, ferner mit einem eingangsseitigen Durchfluss-Sensor (25) zum Messen des Durchflusses (VV, VU) durch die eingangsseitige Vorlaufleitung (5).

4. Vorrichtung nach wenigstens einem der Ansprüche 1 bis 3, ferner mit einem ausgangsseitigen Durchfluss-Sensor (27) zum Messen des Durchflusses (VB) durch die ausgangsseitige Vorlaufleitung (7).

5. Vorrichtung nach Anspruch 2, 3 und 4, ferner mit einer Regelungseinheit, die derart ausgebildet ist, dass sie ein Mischungsverhältnis in der ausgangsseitigen Vorlaufleitung (7), gebildet aus dem im Vorlaufbehälter (3) zwischengespeicherten Produkt und dem durch die Umgehungsleitung (13) eingespeisten Produkt, mittels Ansteuerung des Durchfluss-Stellers (15) auf Grundlage von Messsignalen des eingangsseitigen und des ausgangsseitigen Durchfluss-Sensors (25, 27) einstellen kann.

6. Vorrichtung nach Anspruch 3, wobei die Umgehungsleitung (13) in Strömungsrichtung hinter dem eingangsseitigen Durchfluss-Sensor (25) von der eingangsseitigen Vorlaufleitung (5) abzweigt.

7. Vorrichtung zum Behandeln eines flüssigen Produkts (2), insbesondere eines Getränks, umfassend die Vorrichtung (1) nach wenigstens einem der vorigen Ansprüche und eine Behandlungseinheit (9), wobei das Fassungsvermögen des Vorlaufbehälters (3) mindestens so groß ist wie das Gesamtfassungsvermögen der Rückführleitung (11), der Behandlungseinheit (9) und einer die Behandlungseinheit (9) und die Rückführleitung (11) verbindenden Verbindungsleitung (17), insbesondere einschließlich des Fassungsvermögens einer zwischen die Rückführleitung und die Verbindungsleitung geschalteten Füllermaschine (12).

8. Verfahren zum Bereitstellen eines zu behandelnden flüssigen Produkts (2), insbesondere eines Getränks, mit folgenden Schritten:
a) Zurückführen von behandeltem und wiederzuverwertendem Produkt (2) in einen Vorlaufbehälter (3) und dortiges Zwischenspeichern des Produkts (2); und
b) Ausleiten des zwischengespeicherten Produkts (2) aus dem Vorlaufbehälter (3) in eine ausgangsseitige Vorlaufleitung (7), **gekennzeichnet durch** einen Schritt c), in dem unbehandeltes Produkt (2) **durch** eine den Vorlaufbehälter (3) umgehende Umgehungsleitung (13) in die ausgangsseitige Vorlaufleitung (7) eingeleitet wird.

9. Verfahren nach Anspruch 8, ferner umfassend einen Schritt d), in dem das im Schritt b) ausgeleitete zwischengespeicherte Produkt (2) als ein erster Teilproduktstrom (VZ) und das im Schritt c) eingeleitete unbehandelte Produkt (2) als ein zweiter Teilproduktstrom (VU) zu einem Produktstrom (VB) zusammengeführt und zur Behandlung des Produkts (2) weiter geleitet werden.

10. Verfahren nach Anspruch 9, wobei der Volumenstrom des zweiten Teilproduktstroms (VU) ermittelt wird, indem ein Durchfluss durch eine eingangsseitige Vorlaufleitung (5) zum Einleiten unbehandelten Produkts (2) in den Vorlaufbehälter (3) gemessen wird.

11. Verfahren nach Anspruch 10, wobei der Durchfluss des Produktstroms (VB) in der ausgangsseitigen Vorlaufleitung (7) gemessen wird und das Mischungsverhältnis des ersten und zweiten Teilproduktstroms (VZ, VU) durch Anpassen des Anteils des zweiten Teilproduktstroms (VU) an dem Produktstrom (VB) eingestellt wird.

12. Verfahren nach einem der Ansprüche 9 bis 11, ferner mit folgenden Schritten:
f) Erkennen, dass ein minimaler Füllstand des zwischengespeicherten Produkts (2) im Vorlaufbehälter (3) erreicht ist;
g) Einleiten von unbehandeltem Produkt (2) in den Vorlaufbehälter (3); und/oder
h) Reduzieren des ersten Teilproduktstroms (VZ) und Anpassen des Durchflusses des zweiten Teilproduktstroms (VU) an den Produktstrom (VB), oder Unterbrechen des ersten Teilproduktstroms (VZ) und Angleichen des Durchflusses des zweiten Teilproduktstroms (VU) an den Produktstrom (VB).

13. Verfahren nach wenigstens einem der Ansprüche 8 bis 12, wobei der Wassergehalt des im Schritt b) ausgeleiteten zwischengespeicherten Produkts (2) und des im Schritt c) eingeleiteten unbehandelten Produkts (2) identisch ist.

14. Verfahren nach wenigstens einem der Ansprüche 8 bis 13, wobei der Schritt a) während oder in Folge eines Stillstands einer Füllmaschine (12) zum Abfüllen des behandelten Produkts (2) durchgeführt wird.

15. Verfahren nach Anspruch 14, wobei das Produkt (2) während des Stillstands der Füllmaschine (12) unter Einbeziehung der Schritte a) und b) im Kreislauf gefahren wird.

## Claims

1. Device (1) for providing a liquid product (2) to be treated, in particular a beverage, with:
- a supply tank (3) for intermediately storing the product (2);
- a supply pipe (7) on the outlet side for discharging the product (2) from the supply tank (3) and forwarding the product (2) to its treatment;
- a supply pipe (5) on the inlet side for introducing untreated product (2) into the supply tank (3); and
- a return pipe (11) for returning treated product (2) into the supply tank (3),
**characterized by** a by-pass (13) through which untreated product (2) can be fed into the supply pipe (7) on the outlet side bypassing the supply tank (3).

2. Device according to claim 1, furthermore with a flow adjustor (15) for adjusting the volume flow rate (VU) through the by-pass (13).

3. Device according to claim 1 or 2, furthermore with a flow sensor (25) on the inlet side for measuring the volume flow rate (W, VU) through the supply pipe (5) on the inlet side.

4. Device according to at least one of claims 1 to 3, furthermore with a flow sensor (27) on the outlet side for measuring the volume flow rate (VB) through the supply pipe (7) on the outlet side.

5. Device according to claim 2, 3 and 4, furthermore with a control unit which is designed such that it can adjust a mixing ratio in the supply pipe (7) on the outlet side, formed by the product intermediately stored in the supply tank (3) and the product fed through the by-pass (13), by means of controlling the flow adjustor (15) on the basis of measuring signals of the flow sensors (25, 27) on the inlet side and on the outlet side.

6. Device according to claim 3, wherein the by-pass (13) branches off from the supply pipe (5) on the inlet side in the direction of flow downstream of the flow sensor (25) on the inlet side.

7. Device for treating a liquid product (2), in particular a beverage, comprising the device (1) according to at least one of the preceding claims, and a treatment unit (9), wherein the capacity of the supply tank (3) is at least as high as the total capacity of the return pipe (11), the treatment unit (9) and a connecting pipe (17) connecting the treatment unit (9) and the return pipe (11), in particular including the capacity of a filler machine (12) inserted between the return pipe and the connecting pipe.

8. Method of providing a liquid product (2) to be treated, in particular a beverage, comprising the steps of:
a) returning treated product (2) to be reused into a supply tank (3) and intermediately storing the product (2) there; and
b) discharging the intermediately stored product (2) from the supply tank (3) into a supply pipe (7) on the outlet side,
**characterized by** a step c) in which untreated product (2) is introduced into the supply pipe (7) on the outlet side through a by-pass (13) bypassing the supply tank (3).

9. Method according to claim 8, further comprising a step d) in which the intermediately stored product discharged in step b) as a first partial product flow (VZ), and the untreated product (2) introduced in step c) as a second partial product flow (VU) are combined to a product flow (VB) and forwarded for treating the product (2).

10. Method according to claim 9, wherein the volumetric flow rate of the second partial product flow (VU) is determined by measuring a volume flow rate through a supply pipe (5) on the inlet side for introducing untreated product (2) into the supply tank (3).

11. Method according to claim 10, wherein the volume flow rate of the product flow (VB) is measured in the supply pipe (7) on the outlet side and the mixing ratio of the first and the second partial product flows (VZ, VU) is adjusted by adapting the proportion of the second partial product flow (VU) to the product flow (VB).

12. Method according to one of claims 9 to 11, further comprising the steps of:
f) detecting that a minimum filling level of the intermediately stored product (2) is reached in the supply tank (3);
g) introducing untreated product (2) into the supply tank (3); and/or
h) reducing the first partial product flow (VZ) and adapting the volume flow rate of the second partial product flow (VU) to the product flow (VB), or interrupting the first partial product flow (VZ) and adjusting the volume flow rate of the second partial product flow (VU) to the product flow (VB).

13. Method according to at least one of claims 8 to 12, wherein the water contents of the intermediately stored product (2) discharged in step b) and the untreated product (2) introduced in step c) are identical.

14. Method according to at least one of claims 8 to 13, wherein step a) is carried out during or as a consequence of a standstill of a filling machine (12) for filling the treated product (2).

15. Method according to claim 14, wherein the product (2) is circulated during the standstill of the filling machine (12) including steps a) and b).

## Revendications

1. Dispositif (1) pour la préparation d'un produit liquide (2) à traiter, notamment une boisson, comprenant
- un réservoir d'alimentation (3) pour le stockage intermédiaire du produit (2) ;
- une conduite de sortie d'alimentation (7) pour évacuer le produit (2) du réservoir d'alimentation (3), et poursuivre l'acheminement du produit (2) en vue de son traitement ;
- une conduite d'entrée d'alimentation (5) pour introduire du produit (2) non traité dans le réservoir d'alimentation (3) ; et
- une conduite de retour (11) pour ramener du produit (2) traité dans le réservoir d'alimentation (3), **caractérisé par** une conduite de dérivation (13) par laquelle du produit (2) non traité peut être amené dans la conduite de sortie d'alimentation (7), en contournant le réservoir d'alimentation (3).

2. Dispositif selon la revendication 1, comprenant, par ailleurs, un organe de réglage de débit (15) pour régler le débit (VU) à travers la conduite de dérivation (13).

3. Dispositif selon la revendication 1 ou la revendication 2, comprenant, par ailleurs, un capteur de débit d'entrée (25) pour mesurer le débit (VV, VU) à travers la conduite d'entrée d'alimentation (5).

4. Dispositif selon l'une au moins des revendications 1 à 3, comprenant, par ailleurs, un capteur de débit de sortie (27) pour mesurer le débit (VB) à travers la conduite de sortie d'alimentation (7).

5. Dispositif selon les revendications 2, 3 et 4, comprenant, par ailleurs, une unité de régulation, qui est conçue de manière à pouvoir régler, dans la conduite de sortie d'alimentation (7), une proportion de mélange formé du produit stocké de manière intermédiaire dans le réservoir d'alimentation (3) et du produit amené par la conduite de dérivation (13), moyennant une commande de l'organe de réglage de débit (15) sur la base de signaux de mesure du capteur de débit d'entrée et du capteur de débit de sortie (25, 27).

6. Dispositif selon la revendication 3, dans lequel la conduite de dérivation (13) est dérivée de la conduite d'entrée d'alimentation (5) à la suite du capteur de débit d'entrée (25) en se référant à la direction d'écoulement.

7. Dispositif pour le traitement d'un produit liquide (2), notamment une boisson, comprenant le dispositif (1) selon l'une au moins des revendications précédentes, et une unité de traitement (9), dispositif dans lequel la capacité du réservoir d'alimentation (3) est au moins aussi grande que la capacité globale de la conduite de retour (11), de l'unité de traitement (9) et d'une conduite de liaison (17), qui relie l'unité de traitement (9) et la conduite de retour (11), notamment y compris la capacité d'une machine de remplissage (12) montée entre la conduite de retour (11) et la conduite de liaison.

8. Procédé pour la préparation d'un produit liquide (2) à traiter, notamment une boisson, comprenant les étapes suivantes :
a) retour de produit (2) traité et à recycler dans un réservoir d'alimentation (3) et stockage intermédiaire du produit (2) dans celui-ci ; et
b) évacuation du produit (2) stocké de manière intermédiaire, hors du réservoir d'alimentation (3) vers une conduite de sortie d'alimentation (7),
**caractérisé par**
une étape c), dans laquelle du produit (2) non traité est introduit dans la conduite de sortie d'alimentation (7) à travers une conduite de dérivation (13) contournant le réservoir d'alimentation (3).

9. Procédé selon la revendication 8, comprenant, par ailleurs, une étape d), dans laquelle le produit (2) stocké de manière intermédiaire et évacué au cours de l'étape b), en tant que premier écoulement partiel de produit (VZ), et le produit (2) non traité amené au cours de l'étape c), en tant que deuxième écoulement partiel de produit (VU), sont réunis en un écoulement de produit (VB) et acheminés vers le traitement du produit (2).

10. Procédé selon la revendication 9, d'après lequel on détermine le débit volumique du deuxième écoulement partiel de produit (VU), en mesurant un débit à travers une conduite d'entrée d'alimentation (5) pour l'amenée de produit (2) non traité dans le réservoir d'alimentation (3).

11. Procédé selon la revendication 10, d'après lequel on mesure le débit de l'écoulement de produit (VB) dans la conduite de sortie d'alimentation (7), et on règle la proportion du mélange du premier et du deuxième écoulement partiel de produit (VZ, VU) par adaptation de la part du deuxième écoulement partiel de produit (VU) à l'écoulement de produit (VB).

12. Procédé selon l'une des revendications 9 à 11, comprenant, par ailleurs, les étapes suivantes :
f) s'assurer qu'un niveau de remplissage minimal du produit (2) stocké de manière intermédiaire est atteint dans le réservoir d'alimentation (3) ;
g) amener du produit (2) non traité dans le réservoir d'alimentation (3) ; et/ou
h) réduire le premier écoulement partiel de produit (VZ) et adapter le débit du deuxième écoulement partiel de produit (VU) à l'écoulement de produit (VB), ou interrompre le premier écoulement partiel de produit (VZ) et rendre conforme le débit du deuxième écoulement partiel de produit (VU) à l'écoulement de produit (VB).

13. Procédé selon l'une au moins des revendications 8 à 12, d'après lequel la teneur en eau du produit (2) stocké de manière intermédiaire et évacué à l'étape b), et du produit (2) non traité introduit à l'étape c), est identique.

14. Procédé selon l'une au moins des revendications 8 à 13 , d'après lequel l'étape a) est effectuée pendant ou à la suite d'un arrêt d'une machine de remplissage (12) pour le conditionnement du produit (2) traité.

15. Procédé selon la revendication 14, d'après lequel on fait circuler le produit (2), pendant l'arrêt de la machine de remplissage (12), en circuit fermé, en incluant les étapes a) et b).
